# DEMANDE DE BREVET EUROPEEN

(11) **EP 1 769 961 A2**
(43) Date de publication de la demande: **04.04.2007**
(21) Numéro de dépôt: 06291521.0
(22) Date de dépôt: 27.09.2006
(51) Int. Cl.: B60J 7/20, B60J 7/02

(54) **Construction légère pour un capot de recouvrement d'un espace arrière de rangement d'un véhicule transformable**

(30) Priorité: 29.09.2005 FR 0509945
(71) Demandeur: Heuliez, 79142 Cerizay Cedex (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Pichat, Thierry

(57) **Abrégé**

Il s'agit de recouvrir un espace (19) arrière de rangement d'un véhicule transformable. Le dispositif (21) de recouvrement concerné comprend une construction légère (210) montée mobile par rapport au châssis (3), pliable et dépliable et/ou souple et qui est adaptée pour être :
- pliée, déformée ou déplacée, pour dégager un passage supérieur (25) pour un accès à des bagages disposés dans l'espace (19) de rangement et pour y ranger le toit (5) mobile du véhicule,
- et dépliée, encore déformée, ou à nouveau déplacée, pour fermer ledit passage (25).

## Description

L'invention concerne un véhicule transformable présentant un avant (AVT), un arrière (ARR) et comprenant un toit, mobile entre un état fermé au-dessus de l'habitacle et un état ouvert à l'écart, un espace arrière de rangement situé derrière l'habitacle, et un dispositif de recouvrement de cet espace monté mobile par rapport au châssis.

Est ici concernée la manière de recouvrir le dessus d'un coffre adapté pour recevoir indifféremment des bagages ou le toit du véhicule, ce véhicule étant typiquement un véhicule convertible, susceptible d'avoir par exemple une configuration de pick-up découvrable.

On peut considérer qu'est aussi ici concernée la réalisation d'un dispositif de recouvrement de coffre, comme précité, qui soit simple et peu coûteux.

En pratique, pour satisfaire au moins certains des buts susmentionnés, il est proposé que le dispositif de recouvrement de l'espace arrière de rangement comprenne une construction légère à couverture souple, comme une bâche.

Favorablement, la construction légère considérée, y compris sa couverture souple, qui pourra donc être une bâche, sera adaptée pour être déformée et déplacée pour dégager, au-dessus dudit espace de rangement, un passage d'accès pour bagages, ou autres charges extérieures, disposés/à disposer dans cet espace de rangement et pour y ranger le toit mobile, et pour fermer ledit passage.

On prévoit également qu'elle puisse être :
- pliée, ou déformée, dans un premier état ou une première position, pour dégager, au-dessus dudit espace de rangement, le passage d'accès «bagages»,
- et pliée, ou déformée, dans un second état ou une seconde position, pour y ranger le toit mobile, dans le deuxième état de celui-ci.

Suivant une considération particulière, on prévoit que le dispositif de recouvrement soit porté directement par le châssis du véhicule, en liaison avec des moyens permettant son ouverture et sa fermeture par pliage et/ou déformation.

Suivant une autre approche, on prévoit aussi que, pour dégager le passage précité permettant de ranger le toit dans l'espace de rangement par déplacement de la construction légère, sans nécessairement la déformer ou la plier, celle-ci soit portée par un bâti intermédiaire monté alors mobile par rapport au châssis du véhicule.

Dans ce cas, on conseille, pour ouvrir et fermer ce passage d'accès au coffre :
- que le bâti intermédiaire soit articulé vers l'arrière au châssis du véhicule, en déplaçant donc avec lui, lors de ces mouvements, la construction légère,
- et que cette construction légère soit mobile ou déplaçable par rapport au bâti intermédiaire, pour être ouverte et fermée, l'ouverture dudit bâti autour de son articulation permettant le rangement du toit et l'ouverture de la construction légère, ou du dispositif de recouvrement correspondant, permettant l'accès aux bagages et autres charges du coffre.

On peut ainsi définir des mouvements différents pour l'ouverture du bâti (rangement du toit dans le coffre) et pour l'ouverture du dispositif de recouvrement (rangement et/ou accès aux bagages dans le coffre).

Pour la réalisation structurelle du dispositif de recouvrement en lui-même, ou au moins de sa «construction légère», il est en particulier proposé de le/la réaliser :
- sous la forme de toile enroulable sur un rouleur,
- ou comme un système en accordéon,
- ou encore sous forme de panneaux semi-rigides articulés entre eux,
- voire encore sous la forme d'une toile souple portée par des éléments d'encadrement articulés entre eux et/ou pliables les uns par rapport aux autres.

Dans certains cas, on peut considérer comme utile et approprié de prévoir, vers l'arrière du véhicule (et donc du châssis), un portillon (typiquement rigide) articulé au châssis de manière à basculer autour d'un axe sensiblement transversal à l'axe longitudinal du véhicule.

La liaison entre le portillon et le châssis sera de préférence telle que ce portillon sera adapté pour être ouvert et fermé, typiquement pour un accès à l'intérieur du coffre, par l'extrémité arrière de celui-ci et du véhicule.

Ci-dessous suit une description détaillée de quelques réalisations privilégiées données à titre d'exemples non limitatifs et dans lesquels :
- la figure 1 est une vue schématique en coupe longitudinale (axe X) d'un véhicule,
- la figure 2 est une même coupe que la fig.1, plus locale, montrant l'interaction entre l'arrière de la couverture de recouvrement et le portillon,
- la figure 3 montre une couverture en toile souple montée sur un enrouleur,
- les figures 4 et 5 correspondent à la coupe IV-IV figure, suivant deux réalisations,
- la figure 6 schématise le bâti articulé au châssis du véhicule, avec son habillage,
- la figure 7 correspond à une vue locale, suivant la coupe VII-VII de la figure 8,
- la figure 8 est une perspective arrière partielle du véhicule de la fig.1,
- et les figures 9 à 13 schématisent différentes réalisations possibles du dispositif de recouvrement avec sa couverture souple ou déformable, les figs.12 et 13 montrant différents états de la solution à cadre articulé portant la couverture de la fig.11.

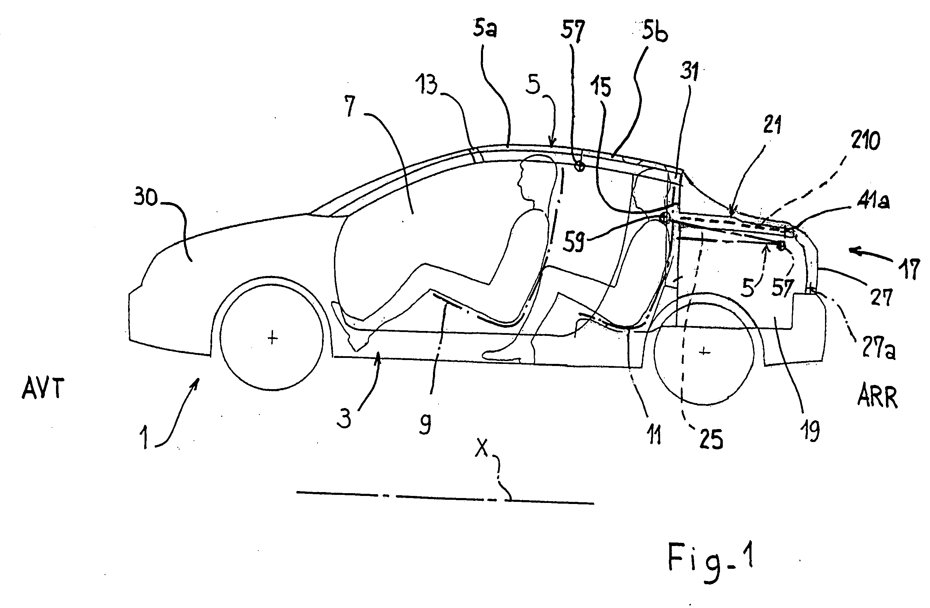

Figure 1, on voit un véhicule 1 comprenant un châssis structurel 3 définissant ou relié à, en partie haute, un toit 5 qui, avec une zone environnante de la carrosserie 30 équipant ce châssis 3, définit l'habitacle intérieur 7.

Cet habitacle 7 accueille ici au moins quatre places assises réparties par exemple par paires en deux rangées de sièges, respectivement avant 9 et arrière 11.

Figure 1, l'habitacle 7 est recouvert par le toit 5 qui, fermé, s'étend longitudinalement (suivant l'axe longitudinal médian X du véhicule) entre la traverse supérieure 13 du pare-brise et, à l'arrière, la vitre arrière (ou lunette arrière) 15 dressée globalement transversalement à l'axe longitudinal X.

Le toit 5 est mobile entre une première position dans laquelle il recouvre au moins en partie l'habitacle 7 et une deuxième position dans laquelle cet habitacle est au moins en partie dégagé, le toit étant alors situé à l'écart du dessus de l'habitacle. Favorablement, il s'agira d'un toit articulé vis-à-vis du châssis 3, même si un toit retirable (par complète séparation avec le châssis 3 et donc le véhicule) est envisageable, par exemple un « hard top ».

Par ailleurs, ce toit 5 est ici un toit rigide, même si une capote souple articulée est envisageable. Le toit comprend au moins deux éléments rigides 5a,5b de recouvrement de l'habitacle, respectivement un élément avant 5a et un élément arrière 5b situé derrière l'élément avant au moins dans ladite première position du toit au-dessus de l'habitacle 7, ces éléments avant et arrière étant ici articulés l'un par rapport à l'autre autour d'un premier pivot 57 s'étendant sensiblement perpendiculairement à l'axe longitudinal X du véhicule.

L'élément arrière 5b du toit est en outre articulé par rapport au châssis 3 autour d'un second pivot 59 s'étendant sensiblement perpendiculairement audit axe longitudinal X. Le passage du toit de sa première à sa seconde position inclut un pliage des éléments avant et arrière du toit l'un vers l'autre et l'articulation de l'élément 5b autour du pivot 59 (voir toit plié dans l'espace 19, traits mixtes figure 1).

D'autres éléments de toit, tels que des custodes articulées, pourraient aussi être prévus, de même que d'autres mécanismes de mouvement du toit (oscillo-coulissant, éléments coulissants sur des glissières...).

Qu'il s'agisse d'une version « pick-up », ou transformable, l'espace arrière de rangement (ou de chargement) 19 est situé en contrebas du sommet de la vitre arrière 15 et, ici, du toit 5 alors fermé.

La limite arrière de ce toit 5 définit également, et sensiblement, la limite avant d'un ensemble de capotage mobile 17 adapté pour recouvrir ou libérer l'accès à une zone de rangement arrière 19 qui pourra être considérée, en particulier, comme une plate-forme de pick-up (couverture 210 ouverte) ou comme un coffre arrière.

La zone 19 définit un volume de rangement du toit 5 et/ou de bagages (ou autres charges). Ici, les deux peuvent être rangées dans un volume unique qui occupe toute la zone 19 et donc l'intégralité du volume du coffre illustré. Rangés dans la zone 19, les éléments de toit 5a, 5b sont dans un état plié (voir figure 1).

L'ensemble de capotage mobile 17 comprend au moins un dispositif mobile 21 de recouvrement adapté pour recouvrir au moins le dessus de l'espace de rangement 19, à l'endroit (au moins) de son ouverture supérieure 25.

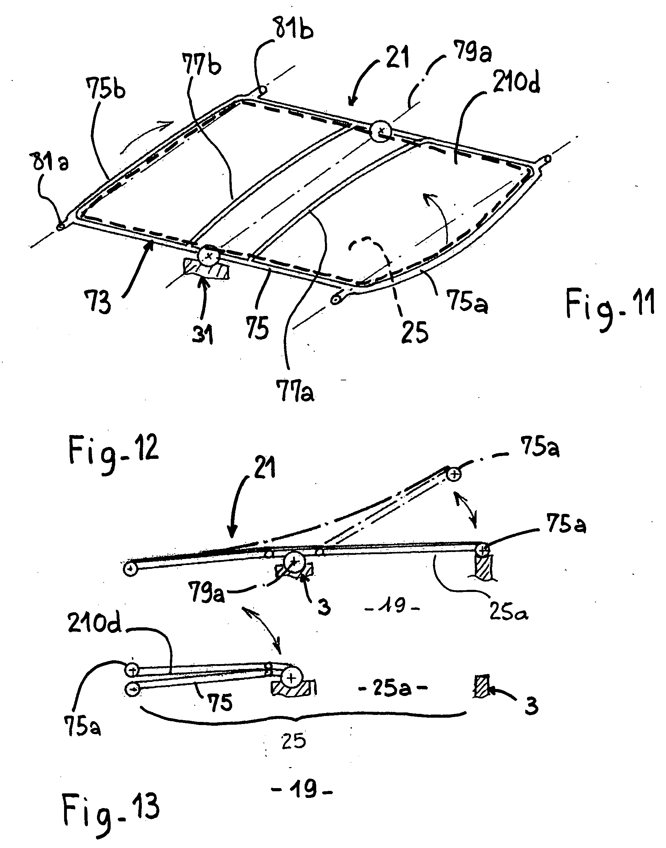

Et ce dispositif de recouvrement 21 comprend lui-même au moins une construction, ou une couverture, légère 210, pliable et dépliable et/ou souple, telle que présentée ci-avant dans ses caractéristiques de pliage/dépliage, déformation et/ou déplacement, pour :
- à l'ouverture, dégager en haut de l'espace 19, à l'endroit de l'ouverture 25, un passage 25a qui peut occuper tout ou partie de cette ouverture pour un accès à des « bagages » disposés dans cet espace et pour y ranger le toit mobile 5 (figure 13),
- à la fermeture, fermer ce passage 25a (figure 12, trait plein, position horizontale).

Eventuellement, l'ensemble mobile 17 de capotage de l'espace de rangement 19 peut comprendre en outre, vers l'arrière (ARR) du véhicule, un portillon 27 adapté pour être ouvert et fermé, pour un accès audit espace 19, par l'arrière de celui-ci.

Au moins dans son état fermé contre le châssis, ce portillon se dresse donc sur une hauteur permettant une fermeture « en hauteur » de cet espace, à son bord ouvert arrière.

Le portillon 27 est articulé au châssis de manière à basculer autour d'un axe 27a transversal à l'axe X.

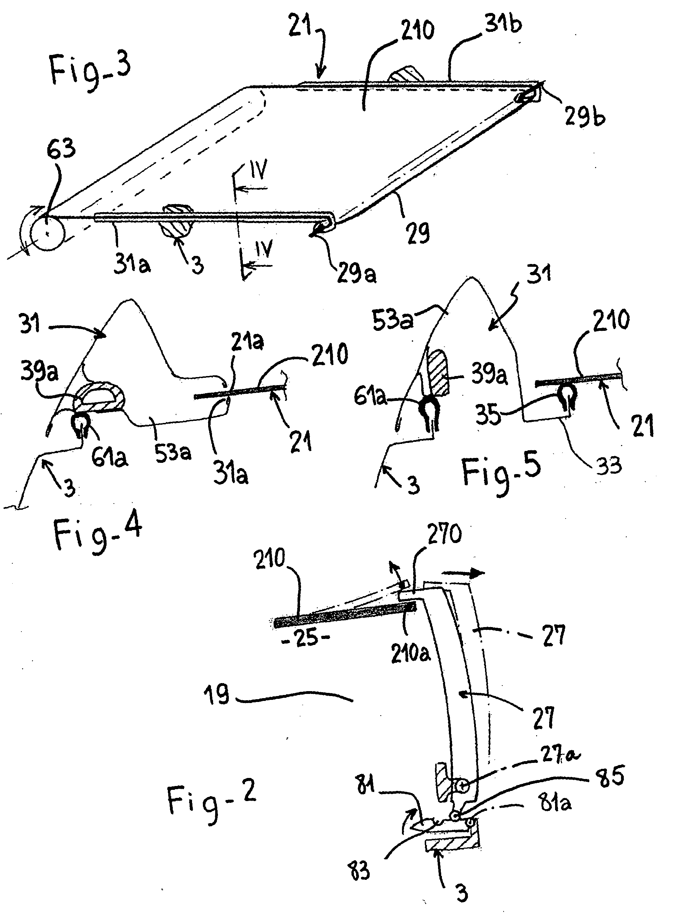

Favorablement, et comme illustré fig.2, la fermeture de ce portillon contre le châssis permettra à un bord de ce portillon, ici son bord supérieur avant 270, de venir retenir un bord de la construction légère 210, de sorte à interdire alors son ouverture.

Figure 2, le bord considéré du portillon recouvre le bord arrière 210a de la construction légère de bâchage, alors fermée par dessus l'ouverture 25.

Par souci de facilité de lecture, on dénommera ci-après « couverture » la construction légère 210, 210b...

Toujours fig.2, et couverture 210 fermée, alors qu'il demeure rabattu et, sensiblement, lui-même fermé contre le châssis, le portillon 27 peut, par un court mouvement autorisé, occuper soit une première position de retenue de cette couverture 210 (trait plein), soit une deuxième position de libération de la couverture autorisant alors son ouverture (traits mixtes).

Pour cela, on a prévu fig.2 un cliquet 81 permettant d'indexer le portillon dans sa deuxième position. Ceci est réalisé grâce au cliquet 81 monté pivotant en 81a, sur le châssis 3, avec rappel élastique, comme l'indique la flèche fig.2. Une encoche 83 est réalisée sur ce cliquet pour permettre d'indexer un pion 85 situé dans le bas du portillon.

Revenant au dispositif de recouvrement 21, des moyens permettant son ouverture et sa fermeture par pliage/dépliage et/ou déformation lui permettent d'être porté soit directement soit indirectement par le châssis 3. Figure 3, une barre transversale 29, fixée ici le long du bord transversal arrière de la couverture 210 présente à ses extrémités latérales des pions saillants 29a, 29b qui coulissent chacun dans une glissière latérale 31a, 31b fixée ou intégrée soit au châssis 3, soit à un bâti intermédiaire 31 monté articulé à ce châssis.

Dans ce dernier cas, le dispositif de recouvrement 21 est porté par ce bâti intermédiaire et est mobile et/ou déplaçable par rapport à lui.

La figure 4 montre ainsi cette solution à glissières, dans l'hypothèse où le dispositif de recouvrement 21 est guidé latéralement, ici en 21a, dans la glissière 31a ici formée dans le bâti intermédiaire 31.

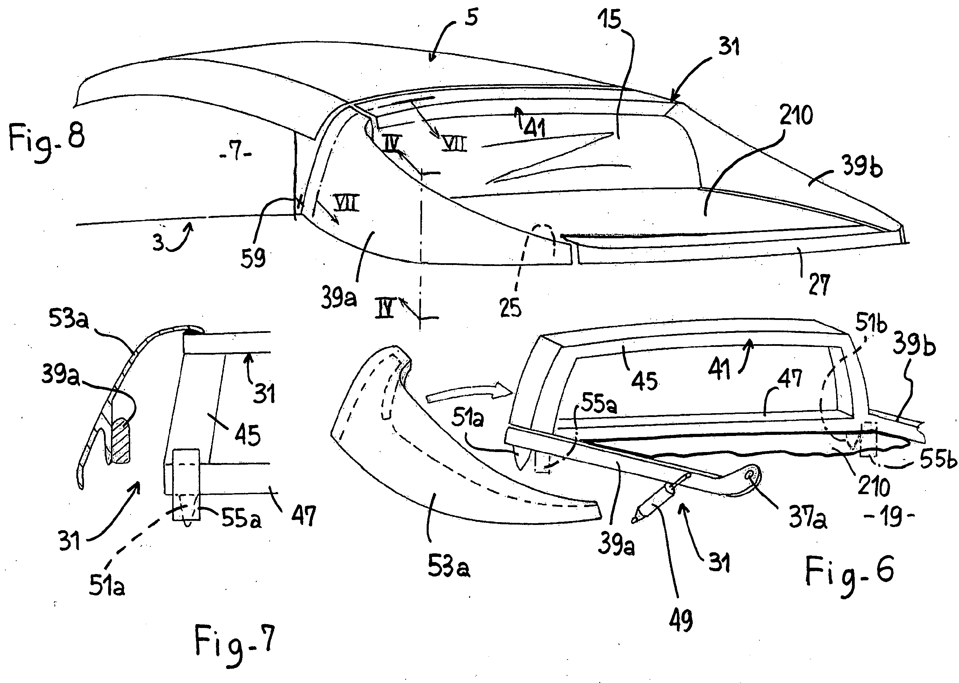

A titre d'alternative, la couverture 210 peut latéralement reposer, fermée, sur les bords latéraux du châssis le long de l'ouverture 25 ou, comme illustré figure 5, sur les bords correspondants, ici figurés pour l'un en 33 du bâti 31.

Des joints élastiques, tels que 35, peuvent assurer la liaison libérable et étanche entre la couverture et ce bâti intermédiaire.

S'il existe, ce bâti 31 sera favorablement articulé vers l'arrière au châssis 3, pour être ouvert et fermé.

De préférence, ce sera pour s'ouvrir de l'avant vers l'arrière du véhicule.

Figure 6, deux pivots d'articulation, dont l'un 37a est figuré, sont situés chacun à l'arrière d'une des deux branches latérales (tubes ou barreaux) 39a, 39b entre lesquelles est disposé le dispositif mobile de recouvrement 21.

On retrouve figure 4 la branche 39a comme un tube et comme une barre sur la figure 5.

Les pivots d'articulation arrière tels que 37a coopèrent avec des moyens de pivotement complémentaires, tels que repérés 41a pour l'un sur la figure 1, situés vers l'extrémité arrière haute de l'espace 19, et donc dans la zone où le portillon 27 (s'il existe) vient porter contre le châssis par son bord supérieur, lorsqu'il est fermé.

Bien que l'ouverture de ce bâti intermédiaire 31 puisse être différente, celle-ci doit permettre le rangement du toit 5 dans l'espace 19, que le couvercle 210 lié à lui soit ouvert ou fermé, tandis que, le bâti 31 fermé par-dessus l'ouverture 25 du châssis, l'ouverture du seul couvercle 210 permettra l'accès aux bagages dans le coffre, en particulier.

Dans ce mode de réalisation, les branches latérales 39a, 39b sont reliées entre elles à l'avant par une armature 41 qui se dresse entre sensiblement le niveau de l'ouverture 25 (ou des branches 39a, 39b) et le niveau arrière du toit 5 dans son état fermé, dans le but donc de fermer à l'arrière l'habitacle, l'armature 41 pouvant à cet égard porter la lunette arrière 15.

L'armature 41 se dresse ainsi à la manière d'un arceau 45 dont les extrémités inférieures sont reliées par un tube ou une barre latérale 47 joignant également les extrémités avant des deux branches latérales 39a, 39b, comme montré figure 6.

Un ou deux vérins 49 d'équilibrage, à ressort ou à gaz, faciliteront la manoeuvre d'ouverture/fermeture de ce bâti intermédiaire articulé 31. Et des centreurs 51a, 51b (voir également figure 7) disposés ici vers l'extrémité avant des branches latérales 39a, 39b, sous elles, faciliteront le positionnement du bâti 31 dans sa fermeture sur le châssis 3 (coopération par exemple entre des pions coniques et des formes en creux).

Au moins latéralement, un tel bâti 31 pourra recevoir deux pièces d'habillage dont l'une 53a a été schématisée figures 1 à 8. Il pourra s'agir de deux coques moulées ou thermoformées, montées latéralement par-dessus les branches latérales et au moins les montants dressés de l'arceau 45, voir plus particulièrement figures 6 et 7.

Pour le verrouillage libérable du bâti 31, les figures 6 et 7 montrent une solution à verrous, tels que 55a, 55b de type grenouillère manuelle, interposés entre l'avant des branches latérales (bord opposé à l'articulation) et le châssis 3. Figure 4, dans une variante qui peut s'appliquer avec les pièces d'habillage précitées, on retrouve une solution à pièces d'habillage latérales, telles que 53a, qui intègrent donc l'une des glissières, 31a, tout en recouvrant le tube 39a.

Figures 4 et 5, les habillages latéraux reposent, de préférence à l'endroit des branches latérales telles que 39a, sur une zone correspondante du châssis 3 par l'intermédiaire de joints tels que 61a.

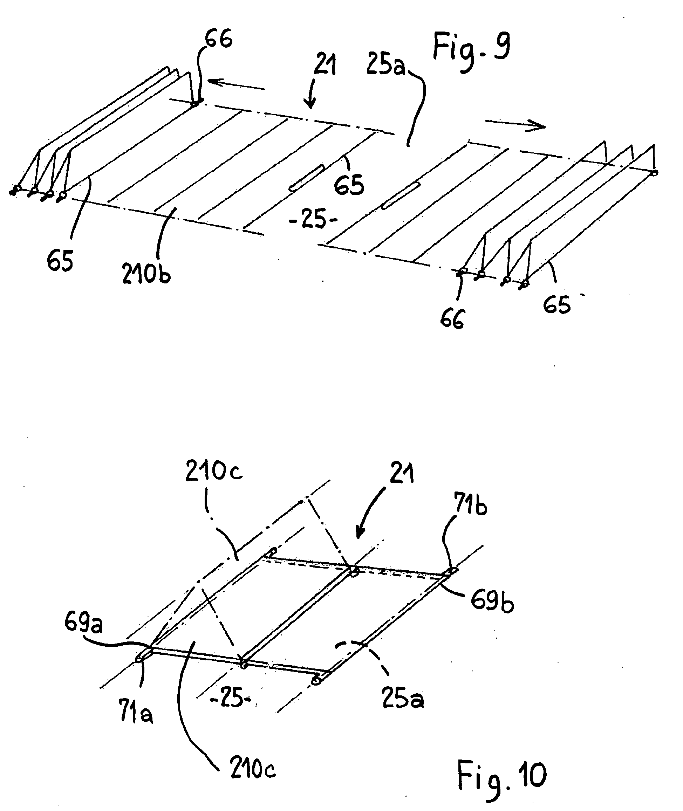

Figure 8, on retrouve le toit mobile 5 dans son état fermé au-dessus de l'habitacle et le bâti 31 également fermé par-dessus l'ouverture supérieure 25 de l'espace de rangement, avec son armature frontale 41 fermant l'habitacle à l'arrière, entre le toit et le niveau de la couverture 210 montrée ici fermée par-dessus le passage 25.

Transversalement, le long du bord arrière de la couverture 210, on aperçoit le haut du portillon 27, alors fermé, qui vient dans la continuité de courbure des pièces d'habillage latérales 39a, 39b. Figure 3, la couverture 210 est ici montée, à l'opposé de sa barre transversale arrière 29, sur un dispositif à enrouleur 63 qui peut être disposé à l'intérieur de l'espace 19, à son extrémité transversale avant, par exemple juste derrière le haut des sièges arrière 11.

La couverture 210 pourra consister en une toile souple et étanche à l'eau, ici enroulable.

Figure 9, la couverture 210b est déformable en accordéon, par plis rabattables, avec éventuellement de fines tiges transversales rigidificatrices 65 liées à cette toile de couverture 210b et pouvant porter latéralement, par exemple à l'endroit d'une pliure sur deux, des pions 66 qui pourraient être engagés dans les glissières précitées 31a, 31b.

Figure 9, on voit la couverture 210b à la fois dépliée et repliée en accordéon, avec ici un possible coulissement tant de l'avant vers l'arrière que l'inverse.

On pourrait prévoir deux demi-couvertures en accordéon, tel qu'illustré.

Figure 10, le dispositif de recouvrement peut être constitué avec une couverture déformable, par exemple comme une feuille thermoformée 210c.

Cette feuille peut être déformée entre un état à plat (trait plein) adapté pour recouvrir l'ouverture 25 précitée et un état déformé, sensiblement plié en dôme (trait mixte) libérant alors tout ou partie de l'ouverture 25, pour créer le passage 25a et donc l'accès à l'intérieur de l'espace de rangement déjà cité.

Des barres, transversales 69a, 69b pourront border à l'avant et à l'arrière la couverture 210c qui pourra, si nécessaire, grâce à elles, par exemple coulisser dans les glissières précitées via des pions tels que 71a, 71b.

Figures 11 à 13, le dispositif de recouvrement 21 est réalisé avec une couverture consistant en une toile 210d souple portée par des moyens d'encadrement 73 qui peuvent être articulés entre eux et/ou pliables les uns par rapport aux autres.

Ces moyens d'encadrement comprennent un cadre périmétrique 75, ainsi que deux barres ou fils rigides intermédiaires 77a, 77b situés à proximité de l'axe médian 79a (transversal à X) du cadre, et s'étendant parallèlement à lui. La couverture souple 210d recouvre toute la surface intérieure du cadre 75 à laquelle elle est fixée en périphérie.

Figure 11, l'élément de recouvrement 21 est sensiblement à plat, dans son état habituel de recouvrement de l'ouverture 25 déjà citée.

La toile souple 210d est tendue.

Dans l'alignement de l'axe transversal d'articulation 79a, le cadre 75 peut porter des tourillons (non représentés) le liant de manière articulée au châssis 3, ou au bâti 31, comme illustré.

Pour ouvrir cette couverture du dispositif de recouvrement 21, de l'arrière vers l'avant dans l'illustration des figures 12 et 13, et ici pour un accès aux bagages, on libère toute retenue du cadre le long de son tronçon transversal arrière 75a et on fait soit pivoter la moitié arrière du cadre autour de l'axe transversal 79a, soit éventuellement tourner la partie de cadre située entre les traverses 77a et 77b (voir figure 12), en particulier si des tourillons de liaison ont été prévus dans la continuité de la traverse 77b et qu'une possible articulation du cadre a été prévue (voir traits mixtes sur la figure 12).

La toile 210d est alors détendue. Il suffit de poursuivre le pliage, ou la déformation, jusque par exemple la situation de la figure 13 où l'on a complètement libéré le passage recherché 25a, en haut de l'ouverture supérieure 25 de l'espace 19, après avoir rabattu l'un sur l'autre les deux moitiés du cadre 75 et donc avoir replié la toile 210d. Ici c'est le châssis 3 que l'on a supposé porteur.

Si seule une demi-ouverture par basculement de l'arrière vers l'avant de sa couverture 210d est souhaitée, comme montré figure 13, on peut alors prévoir en particulier des pions latéraux de retenue 81a, 81b dans le prolongement de la barre transversale avant 75b du cadre 75, comme montré figure 11, pour une liaison fixe avec le châssis ou le bâti intermédiaire 31.

Si nécessaire, un basculement inverse pour une demi-ouverture vers l'arrière serait possible, en adaptant légèrement et de façon simple et évidente la solution ci-dessus.

On notera encore:
- que, de préférence, les moyens de verrouillage libérable 55a,55b solidariseront donc le bâti avec la caisse 3 du véhicule, tout en autorisant la libération de ce bâti 31 pour le rangement du toit, et/ou
- que, favorablement, l'arceau structurel 41 intégré au bâti protègera en cas de retournement du véhicule.

## Revendications

1. Véhicule transformable présentant un avant (AVT), un arrière (ARR) et comprenant un châssis, un habitacle (7) avec des sièges pour les occupants du véhicule, un toit (5,5a,5b) mobile entre un premier état dans lequel il recouvre au moins en partie l'habitacle (7) et un deuxième état dans lequel l'habitacle est au moins en partie dégagé, le toit étant alors situé à l'écart du dessus de l'habitacle qu'il recouvrait dans le premier état, un espace arrière de rangement (19) situé derrière l'habitacle (7), et un dispositif de recouvrement de cet espace arrière (19) de rangement montée mobile par rapport au châssis (3), **caractérisé en ce que** ledit dispositif (21) de recouvrement comprend une construction légère à couverture souple, comme une bâche, (210,210b,210c,210d).

2. Véhicule selon la revendication 1, **caractérisé en ce que** la construction légère, y compris sa couverture souple, est adaptée pour être pliée, déformée ou déplacée pour dégager, au-dessus dudit espace (19) de rangement, un passage (25a) pour un accès à des bagages, ou d'autres charges extérieures, disposés/à disposer dans cet espace (19) de rangement et pour y ranger le toit (5) mobile, et pour fermer ledit passage (25a).

3. Véhicule selon la revendication 1 ou 2, **caractérisé en ce que** la construction légère est adaptée pour être :
- pliée, ou déformée, dans un premier état ou une première position, pour dégager, au-dessus dudit espace (19) de rangement, le/un passage (25a) d'accès aux bagages ou autres charges extérieures disposés/à disposer dans cet espace (19) de rangement,
- et pliée, ou déformée, dans un second état ou une seconde position, pour y ranger le toit (5,5a,5b) mobile, dans le deuxième état de celui-ci.

4. Véhicule selon l'une des revendications précédentes, **caractérisé en ce que**, pour être déplacée afin de permettre de ranger le toit (5,5a,5b) dans l'espace (19) de rangement, la construction légère (210, 210b, 210c, 210d) est portée par un bâti intermédiaire (31) monté mobile par rapport au châssis (3) du véhicule.

5. Véhicule selon la revendication 4, **caractérisé en ce que**:
- le bâti intermédiaire (31) est articulé au châssis (3) du véhicule, pour être ouvert et fermé, en déplaçant avec lui, lors de ces mouvements, la construction légère,
- cette construction légère (210, 210b, 210c, 210d) est mobile ou déplaçable par rapport à ce bâti intermédiaire, pour être elle-même ouverte et fermée,
- et l'articulation du bâti (31) au châssis est adaptée pour permettre le rangement du toit et l'ouverture de la construction légère est adaptée pour permettre un accès aux bagages et autres charges.

6. Véhicule selon l'une des revendications précédentes, **caractérisé en ce que** la construction légère à couverture souple est réalisée sous une forme de toile (210) enroulable sur un enrouleur.

7. Véhicule selon l'une des revendications 1 à 5, **caractérisé en ce que** la construction légère à couverture souple est réalisée en accordéon (210b).

8. Véhicule selon l'une des revendications 1 à 4, **caractérisé en ce que** le dispositif de recouvrement est réalisé sous forme de panneaux semi-rigides (210c) articulés entre eux.

9. Véhicule selon l'une des revendications 1 à 5, **caractérisé en ce que** le dispositif de recouvrement est réalisé sous la forme d'une toile souple (210d) portée par des éléments d'encadrement (75, 75a, 75b) articulés entre eux et/ou pliables les uns par rapport aux autres.

10. Véhicule selon la revendication 9, **caractérisé en ce que** la toile (210d) est fixée sur l'essentiel de sa périphérie à des éléments d'encadrement (75, 75a, 75b).

11. Véhicule selon la revendication 9, **caractérisé en ce que** la toile (210c, 210d) est fixée sur deux barres (75a, 75b, 69a, 69b) parallèles disposées vers des bords extérieurs du dispositif de recouvrement.

12. Véhicule selon l'une des revendications précédentes, **caractérisé en ce qu'**il comprend en outre, vers l'arrière du véhicule, un portillon (27) articulé au châssis de manière à basculer autour d'un axe sensiblement transversal à l'axe longitudinal du véhicule, ce portillon étant adapté pour être ouvert et fermé, sa fermeture sur le châssis (3) permettant à un bord de ce portillon de retenir un bord (20a) du dispositif de recouvrement de sorte à interdire alors, dans au moins une position, l'ouverture de ce dernier.

13. Véhicule selon la revendication 12, **caractérisé en ce que** dans son état de retenue du bord du dispositif de recouvrement, le portillon (27, 270) recouvre ce bord.
